# EUROPEAN PATENT APPLICATION

(11) **EP 2 796 920 A1**
(43) Date of publication of application: **29.10.2014**
(21) Application number: 11877930.5
(22) Date of filing: 21.12.2011
(51) Int. Cl.: G02C 7/04

(54) **COLORED CONTACT LENS**

(71) Applicant: Menicon Co., Ltd., Nagoya-shi, Aichi 460-0006 (JP)
(72) Inventor: MATSUSHITA, Ryo, Kasugai-shi Aichi 487-0032 (JP); GOTO, Yuji, Kasugai-shi Aichi 487-0032 (JP); SUGIYAMA, Akihisa, Kasugai-shi Aichi 487-0032 (JP); NAKAMURA, Erina, Kasugai-shi Aichi 487-0032 (JP)
(74) Representative: Nicholls, Michael John
(86) International application number: PCT/JP2011/007169
(87) International publication number: WO 2013/093971

(57) **Abstract**

A colored contact lens (10) comprising an iris-coloring part (40) that is to be overlapping an iris area (38) of a wearer's eyeball (12) and/or a circular colored band (42) that is to be overlapping inner and outer circumferential sides across a boundary (36) between a cornea (14) and a sclera (34), wherein centers of the iris-coloring part (40) and/or the circular colored band (42) are skewed to one side from a lens geometric center (20) on a radial direction line (22), the radial direction line (22) passing through the lens geometric center (20), and a positioning means is provided to position a lens circumferential direction position so as to stabilize the radial direction line (22) at a position extending in a lateral direction of the wearer's eyeball (12).

## Description

### TECHNICAL FIELD

The present invention relates to a colored contact lens, and particularly to a colored contact lens that can give a cosmetic (beauty) effect to the wearer's eye by providing a colored area on a specific part.

### BACKGROUND ART

From the past, as one type of contact lens worn overlapping the cornea of the eye, several colored contact lenses have been proposed. For example, proposed in Japanese Unexamined Patent Publication No. JP-A-60-235115 (Patent Document 1) is an item having an iris-coloring part that is a colored area overlapping the iris area for which the iris color can be seen through the cornea, making it possible to make the so-called dark part of the eye look like a color that is different from the original.

Also, proposed in PCT Japanese Translation Patent Publication No. JP-A-2008-511025 (Patent Document 2) is a colored contact lens that colors as far as the sclera by providing a circular colored band which is a colored area that expands to and overlaps the inner circumference side and the outer circumference side across the boundary of the cornea and the sclera (limbus). This colored contact lens makes the outer diameter of the cornea larger and clarifies the outer edge by strongly emphasizing it, making it possible to make the eye and thus the overall facial expression appear cute and bright, and these are already available on the market.

However, with this kind of colored contact lens noted in Patent Document 1 and Patent Document 2, though it was possible to give observers a different evaluation image of the expression of the wearer, there were often cases when these gave the observer an unnatural sense. In specific terms, when the colored contact lens of the conventional structure is worn, even when the wearer is facing opposite the observer and has the sight line facing the observer, there were cases when the observer did not sense that the wearer's sight line was facing the observer himself.

Also, when the surroundings are relatively dark such as at night or the like, by the pupil diameter of the wearer becoming larger, there are cases when the inner circumference area of the colored area enters the field of vision, and there was the risk of this blocking the wearer's vision, giving a sense of being a level darker, and making it so that it is not possible to ensure a secure field of vision. In particular, when constantly using colored contact lenses having a circular colored band for which it is easy for the inner circumferential edge part of the circular colored band to enter the field of vision, there was also the risk of strabismus occurring. In response to this, though making the inner diameter of the circular colored band large is conceivable, in this case, the width of the circular colored band (difference between the inner diameter and the outer diameter) becomes small, and it becomes easier for the inner circumferential edge part of the circular colored band to separate from the boundary of the cornea and the sclera (limbus), and thus there was the risk of harming the external appearance of the wearer.

In addition, since it is relatively difficult for the contact lenses to move toward the nose, when the wearer has the sight line facing directly to the side or the like, there were cases when it was not possible for the contact lens to follow the movement of the wearer's eyeball, and the inner circumferential edge part of the circular colored band was skewed greatly from the wearer's limbus at the sides of the nose, giving the observer an unnatural sense. In response to this, though making the inner diameter of the circular colored band smaller is conceivable, in this case, making the outer diameter of the optical part positioned in the lens center smaller is unavoidable, which would make the field of vision itself narrow, so this is not a measure that is usable.

### BACKGROUND ART DOCUMENTS

### PATENT DOCUMENTS

Patent Document 1: JP-A-60-235115
Patent Document 2: JP-A-2008-511025

### SUMMARY OF THE INVENTION

### PROBLEM THE INVENTION ATTEMPTS TO SOLVE

The present invention was created with the circumstances described above in the background, and an object is to provide a colored contact lens of a novel structure capable of giving a cosmetic (beauty) effect to the eye of the wearer without giving an unnatural sense to observers, and also capable of ameliorating the decrease in the wearer's field of vision.

### MEANS FOR SOLVING THE PROBLEM

As a result of earnest examination in order to address these problems, the inventors of the present invention discovered that while the wearer's line of vision seen from the observer is determined by the position of the dark part of the eye on the sclera which is typically called the white part of the eye, specifically, by the position of the cornea, and that the many cases of contact lenses worn on the cornea becoming stabilized slightly biased toward the ear in relation to the visual axis is the cause of giving an unnatural sense to the external appearance of the colored contact lens wearer, and bringing a reduced field of vision, and based on that perspective, completed the present invention.

A first mode of the present invention provides a colored contact lens configured to be worn on an eye including at least one of an iris-coloring part overlapping an iris area of the eye and a circular colored band expanding to and overlapping an inner circumference side and an outer circumference side across a boundary of a cornea and a sclera of the eye, the colored contact lens being characterized in that: centers of the iris-coloring part and/or the circular colored band are skewed to one side from a lens geometric center on a radial direction line that passes through the lens geometric center; and a positioning means is provided that positions a lens circumference direction position so as to stabilize the radial direction line at a position extending in a lateral direction of the eye.

With the colored contact lens constituted according to this mode, the iris-coloring part or the circular colored band are provided in a state with the iris-coloring part and/or the circular colored band center skewed to one side from the lens geometric center on the radial direction line that passes through the lens geometric center. Therefore, by the colored contact lens of this mode being worn so as to have the one side for which the center of the iris-coloring part and/or the circular colored band is skewed positioned toward the nose, when the colored contact lens becomes stable at a position skewed toward the ear when worn, the skew between the visual axis of the wearer, specifically the cornea, and the position of the iris-coloring part or the circular colored band is reduced or eliminated and they generally match. By doing this, the problem of the position of the cornea of the wearer and the position of the iris-coloring part or the circular colored band being skewed as was the case with the colored contact lens of the conventional structure is reduced or eliminated, so when the wearer faces an observer and the sight line is facing toward the observer, the problem of the sight line of the wearer not facing the observer and giving the sense of slightly looking away is eliminated.

Furthermore, with the colored contact lens of this mode, in order to stabilize the radial direction line extending in the direction for which the center of the iris-coloring part and/or the circular colored band is skewed from the lens geometric center at a position extending in the lateral direction of the eye when worn, a positioning means is provided that positions the lens circumference direction position when worn. By doing this, simply by wearing the colored contact lens of this mode so that one side for which the center of the iris-coloring part and/or the circular colored band is skewed is positioned toward the nose, position skew of the iris-coloring part and/or the circular colored band position from the wearer's cornea when worn is reduced or avoided, and it can be stabilized at that position. Therefore, it is possible to prevent in advance problems such as the colored contact lens rotating when worn, or the iris-coloring part and/or the circular colored band for which the center was skewed moving toward the ear or vertically, thus giving an unnatural sense to the observer, or blocking the field of view of the wearer or the like.

Also, in dark locations such as at night, the wearer's pupil diameter increases due to dilation of the pupil, so with a conventional structure contact lens for which the lens geometric center and the center of the iris-coloring part and/or the circular colored band matched, in a state worn stably skewed toward the ear, it was easy for the field of view particularly toward the nose to be affected. In regards to this point, with the colored contact lens of this mode, the iris-coloring part and/or the circular colored band is skewed toward the nose, and it is possible to reduce or avoid position skew from the cornea, so it is possible to reduce or avoid the effect of the iris-coloring part and/or the circular colored band on the field of view toward the nose compared to the conventional structure, without having an increased diameter of the inner diameter of the iris-coloring part and/or the circular colored band. Therefore, even when the pupil diameter becomes large in a dark location, it is possible to reduce or eliminate the risk of a decrease in the visual field due to the iris-coloring part and/or the circular colored band, or of the occurrence of strabismus due to that.

In addition, with the colored contact lens of this mode, it is possible to reduce or avoid the iris-coloring part and/or the circular colored band being skewed toward the nose or having position skew from the cornea, so without having an increase in the inner diameter of the iris-coloring part and/or the circular colored band, it is possible to make the position skew of the wearer's cornea and the iris-coloring part and/or the circular colored band toward the nose when the sight line is facing directly to the side sufficiently small compared to the conventional structure, making it possible to reduce or eliminate the risk of giving an unnatural sense to the observer.

The second mode of the present invention provides the colored contact lens according to the first mode, wherein in relation to the lens geometric center, a skew volume of the center of the iris-coloring part is 0.2 to 2.0 mm, and/or a skew volume of the center of the circular colored band is 0 to 1.7 mm.

With this mode, the skew volume of the center of the iris-coloring part in relation to the lens geometric center is adjusted in a range of 0.2 to 2.0 mm, and/or the skew volume of the center of the circular colored band is 0 to 1.7 mm. Statistically, considering the fact that in many cases, a contact lens skews approximately 0.5 mm in relation to the visual axis and stabilizes, by setting the skew volume in the ranges noted above, by wearing the colored contact lens of this mode so that one side for which the center of the iris-coloring part and/or the circular colored band is skewed is positioned toward the nose, it is possible to more advantageously match the iris-coloring part and/or the circular colored band to the wearer's cornea when worn. Also, at close up vision times such as when facing a person or the like, since the visual axis moves further to the inside due to convergence, when providing both the iris-coloring part and the circular colored band, it is preferable to set the respective skew volumes of the circular colored band and the iris-coloring part in the ranges noted above, and more preferably, to make the skew volume of the iris-coloring part greater than the skew volume of the circular colored band. However, from the perspective of the cosmetic effect, the skew volume from the lens geometric center of their centers can be set to anything according to the desired cosmetic effect, and can be mutually the same, or different from each other.

The third mode of the present invention provides the colored contact lens according to the first mode or second mode, wherein the lens includes both the iris-coloring part and the circular colored band provided on the outer circumference side of the iris-coloring part, and the iris-coloring part and the circular colored band are formed in concentric form.

With this mode, the iris-coloring part and the circular colored band positioned at its outer circumference side are formed concentrically, and are also biased from the lens geometric center, so simply by wearing so that the one side for which the centers of the iris-coloring part and the circular colored band are skewed toward the nose, it is possible to advantageously position the positions of the iris-coloring part and the circular colored band when worn on the wearer's cornea, and also to effectively realize a high cosmetic effect without an unnatural sense.

The fourth mode of the present invention provides the colored contact lens according to the first mode or second mode, wherein the centers of the iris-coloring part and the circular colored band are mutually separated on the radial direction line.

With this mode, since the centers of the iris-coloring part and the circular colored band are mutually separated on the radial direction line, it is possible to increase the degree of freedom for setting the position at which the iris-coloring part and the circular colored band are provided. By doing this, it is possible to provide the iris-coloring part and the circular colored band part at suitable positions to match individual variation and the desired cosmetic effect.

The fifth mode of the present invention provides the colored contact lens according to any of the first through fourth modes, wherein an inner circumferential edge part and an outer circumferential edge part of the iris-coloring part are both circular.

The inner circumferential edge and the outer circumferential edge of the iris of the human eye being circles is typical, and with this mode, since the inner circumferential edge part and the outer circumferential edge part of the iris-coloring part are both circular, it is possible to position the iris-coloring part corresponding to the iris of the wearer, so the desired cosmetic effect can be obtained advantageously.

The sixth mode of the present invention provides the colored contact lens according to any of the first through fourth modes, wherein an outer circumferential edge part of the circular colored band is an oval shape, and a major axis of the outer circumferential edge part matches the radial direction line.

The outer circumferential edge part of the cornea of the human eye typically has a horizontally wide oval shape, and with this mode, the outer circumferential edge part of the circular colored band has an oval shape, so it is possible to even more advantageously position the outer circumferential edge part of the circular colored band corresponding to the outer circumferential edge part of the cornea of the wearer, and also possible to make the outer diameter of the cornea of the wearer even larger and to more clearly emphasize the outer edge without giving an unnatural sense. The inner circumferential edge part of the circular colored band can be a circle, or can be a similar shape to the outer circumferential edge part and be an oval shape smaller than the outer circumferential edge part, and can be decided freely according to the desired cosmetic effect.

The seventh mode of the present invention provides the colored contact lens according to any of the first through sixth modes, further including an optical part provided at a lens center part and a circumferential edge part surrounding the optical part, wherein the positioning means is constituted by a pair of slab-off areas for which the circumferential edge part is made thinner at both sides sandwiching the radial direction line.

With this mode, it is possible to easily constitute the positioning means using a double slab-off structure known from the past. In fact, it is possible to manifest a stable state with one slab-off and the other slab-off at two positions for which the top and bottom are reversed. Therefore, in the case of a wearer for which both eyes have the same visual acuity, as long as one side for which the center of the iris-coloring part and/or the circular colored band is skewed is worn so as to be positioned toward the nose, it is possible to use the same lens reversed vertically for the right eye and for the left eye.

The eighth mode of the present invention provides the colored contact lens according to any of the first through sixth modes, further including an optical part provided at the lens center part and a circumferential edge part surrounding the optical part, wherein the positioning means is constituted by a prism ballast structure for which, compared to one side sandwiching the radial direction line, a peripheral part of the other side is made to be thicker.

With this mode, it is possible to easily constitute the positioning means using a prism ballast structure known from the past. Also, using the gravitational effect, it is possible to realize stable positioning in the contact lens circumference direction, and possible to more advantageously stably position the iris-coloring part on the wearer's cornea and the iris-coloring part, making it possible to advantageously prevent giving the observer an unnatural sense.

The ninth mode of the present invention provides the colored contact lens according to the eighth mode, wherein the centers of the iris-coloring part and/or the circular colored band are further biased from the radial direction line to the one side for which the peripheral part is made thin.

Typically, the worn contact lens in many cases is stabilized at a position for which the lens geometric center is skewed further downward than the visual axis due to the effect of gravity. With the colored contact lens of this mode, while the contact lens is stabilized and positioned using gravitational force using prism ballast, the centers of the iris-coloring part and/or the circular colored band are biased from the radial direction line to one side for which the peripheral part is made thin, specifically, upward. By doing this, while the lens geometric center is stably positioned downward from the cornea using gravity, the iris-coloring part and/or the circular colored band biased upward can be positioned aptly on the cornea, and it is possible to more advantageously improve the outer appearance and visual field of the colored contact lens wearer.

The tenth mode of the present invention provides the colored contact lens according to any of the first through sixth modes, wherein the iris-coloring part has a ring shape, an optical part is provided at the lens center part, an optical geometrical center of the optical part matches the center of the iris-coloring part, and an outer diameter of the optical part is equal to or smaller than an inner diameter of the iris-coloring part.

With this mode, since the geometric center of the optical part matches the center of the iris-coloring part which is skewed to one side more than the lens geometric center on the radial direction line, it is possible to have the geometric center of the optical part when wearing the lens be closer to the visual axis of the wearer, the same as with the iris-coloring part. As a result, it is possible to obtain sufficient optical characteristics even if the outer diameter of the optical part is made smaller so as to be the iris-coloring part inner diameter or less. By doing this, it is possible to make the thickness dimensions of the colored contact lens smaller.

### EFFECT OF THE INVENTION

With the colored contact lens constituted according to the present invention, the iris-color part and the circular colored band are provided in a state for which the centers of the iris-coloring part and/or the circular colored band are skewed to one side from the lens geometric center on the radial direction line that passes through the lens geometric center. By doing this, when the colored contact lens is worn, the position of the lens wearer's visual axis, specifically, the position of the cornea, roughly matches the position of the iris-coloring part and the circular colored band of the colored contact lens. As a result, it is possible to reduce or eliminate the problem of the position of the wearer's cornea being skewed from the position of the iris-coloring part or the circular colored band as was the case with colored contact lenses of the conventional structure, and it is possible to eliminate the problem of giving a sense of unnaturalness to an observer and of decreasing the wearer's visual field due to that position skew.

### BRIEF DESCRIPTION OF THE DRAWINGS

FIGS. 1A-1C are front views of a colored contact lens as a first embodiment of the present invention and its worn state.
FIGS. 2A and 2B are front views of a colored contact lens as a second embodiment of the present invention.
FIGS. 3A and 3B are front views of a colored contact lens as a third embodiment of the present invention.
FIGS. 4A and 4B are front views of a colored contact lens as a fourth embodiment of the present invention.
FIGS. 5A and 5B are front views of a colored contact lens as a fifth embodiment of the present invention.
FIGS. 6A and 6B are front views of a colored contact lens as a sixth embodiment of the present invention.
FIGS. 7A and 7B are front views of a colored contact lens as a seventh embodiment of the present invention.
FIGS. 8A and 8B are front views of a colored contact lens as an eighth embodiment of the present invention.

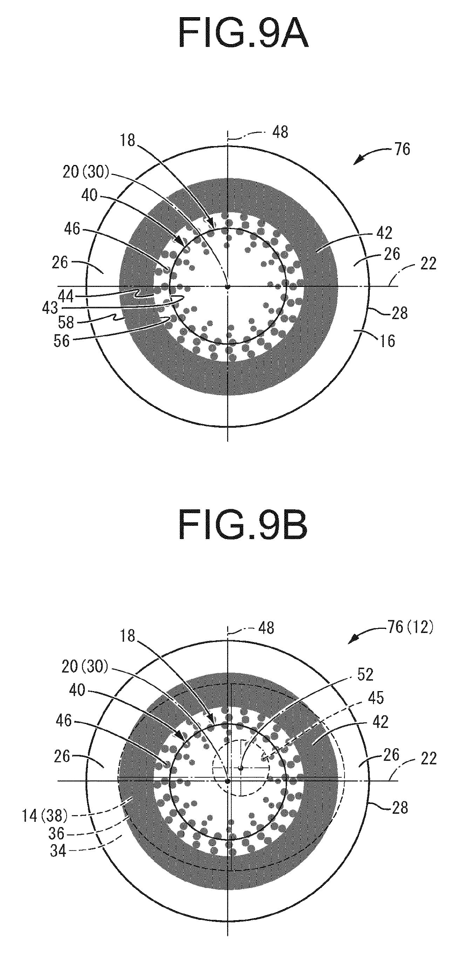

FIGS. 9A and 9B are front views of a colored contact lens of a conventional structure.

### EMBODIMENTS FOR CARRYING OUT THE INVENTION

Following, we will describe embodiments of the present invention while referring to the drawings.

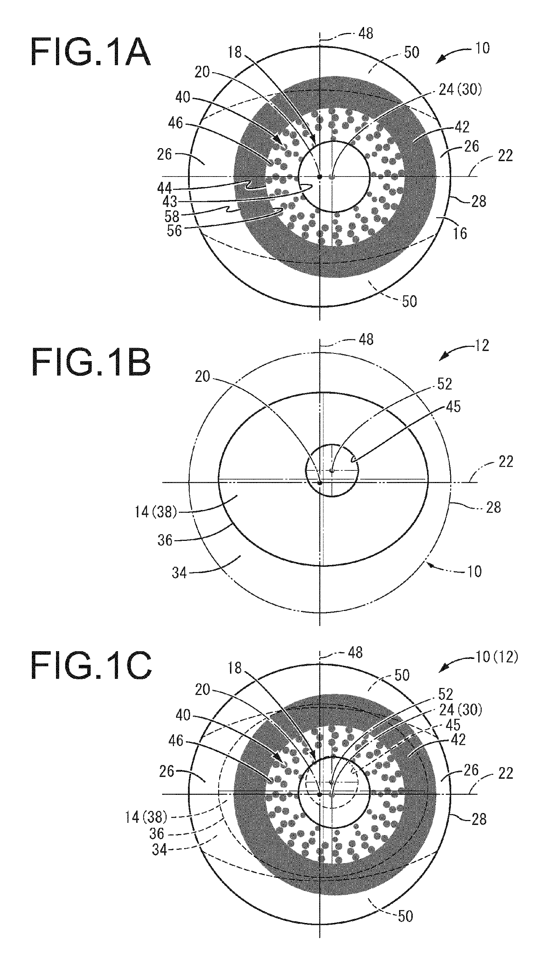

We will use FIGS. 1A to 1C to describe a colored contact lens 10 as a first embodiment of the present invention. FIG. 1A is a front view explanatory drawing of the colored contact lens 10. This colored contact lens 10 has an external outline shape according to a conventionally known colored contact lens, and so as to be worn overlapping the surface of a cornea 14 of an eyeball 12 shown in model form in FIG. 1B, is formed having a partial spherical shell shape having a front surface 16 in a spherical convex surface shape and a back surface (not illustrated) in a spherical concave surface shape. In FIG. 1B, to make it easier to understand, the cornea 14 of the eyeball 12, and the items described later including a sclera 34, a boundary 36 of the cornea 14 and the sclera 34, an outline of a pupil 45, and a visual axis 52 are shown by a solid line, and of the mounted colored contact lens 10, the items described later including a lens geometric center 20, a radial direction line 22, an edge part 28, and an orthogonal longitude line 48 are shown by a virtual line (2-dot-dash line).

The material of the colored contact lens 10 is not restricted, and it is possible to use not only a hard lens such as an RGP lens (oxygen permeable lens) or PMMA (polymethyl methacrylate) or the like, but also soft contact lenses of a hydrophilic type such as PHEMA (polyhydroxyethyl methacrylate) or the like, a non-hydrophilic type such as an acrylic elastomer, or high oxygen permeable type such as silicone hydrogel or the like. In particular, compared to a hard contact lens, a soft contact lens typically has a wide diameter and sufficiently covers the sclera 34 part, and since the movement volume on the cornea 14 during wearing is also small, it is preferably used with the present invention.

In more detail, the colored contact lens 10 may also have an optical part 18 which has been given specific optical characteristics in the lens center part overlapping the cornea 14, making it possible to give a function of correcting vision abnormalities such as myopia, hyperopia, presbyopia and the like. In addition to a vision correction contact lens which gives a correction function to the optical part 18, the present invention can also of course be a non-vision correction contact lens for which the optical part 18 does not have specific optical characteristics. When providing as a non-vision correction contact lens, this can be used exclusively as a cosmetic lens (contact lens for beauty or dress up).

With the front view shown in FIG. 1A, the optical part 18 of the colored contact lens 10 is formed in a circle shape that expands on a center point 24 that is skewed from a lens geometric center 20 to one side (right side in FIG. 1) on a radial direction line 22 extending in the lateral direction (left-right direction in FIG. 1) of the eyeball 12 passing through the lens geometric center 20 on which it is worn when worn on the eyeball 12. Also, on the lens outer circumference part, a circumferential edge part 26 as a non-optical area made to surround the optical part 18 is formed on the lens geometric center 20 having a circular band shape of a designated width. Furthermore, on the lens outer circumferential edge part, an edge part 28 is formed in a round ring shape along the entire circumference to smoothly link both front and back surfaces of the colored contact lens 10. Here, the optical part 18 has an optical part geometric center 30 match the center point 24.

Also, with the colored contact lens 10, the outer diameter dimension is made to be able to cover the entire cornea 14 which is the dark part of the eye of the eyeball 12, and to cover up to the sclera 34 part which is the white part of the eye at a designated width. Specifically, the boundary (limbus) 36 of the cornea 14 and the sclera 34 is made to be positioned further to the inner circumference side than the edge part 28 which is the outer circumferential edge of the colored contact lens 10. The cornea 14 is the area for which the color of the iris of the eye can be visually recognized from the outside.

Furthermore, the colored contact lens 10 configured to be worn on the eyeball 12 has an iris-coloring part 40 that expands in roughly a ring shape overlapping an iris area 38 (see FIG. 1B) for which the iris can be visually recognized through the cornea 14, and a circular colored band 42 that expands to and overlaps the inner circumference side and the outer circumference side across the boundary 36 of the cornea 14 and the sclera 34 provided on the outer circumference side of this iris-coloring part 40. On the radial direction line 22 passing through the lens geometric center 20, the centers of the iris-coloring part 40 and the circular colored band 42 are positioned so as to overlay above the center point 24 skewed to one side from the lens geometric center 20, and are formed in concentric form with the optical part 18. It is preferable that the skew volume of the center of the iris-coloring part 40 in relation to the lens geometric center 20 be set to a range of from 0.2 to 2.0 mm. Also, the skew volume of the center of the circular colored band 42 in relation to the lens geometric center 20 is preferably set to a range of from 0 to 1.7 mm. With this embodiment, the respective skew volumes are the same.

The iris-coloring part 40 is an item intended to give a different impression to the eye of the wearer by adding a different color to the iris which can be visually recognized through the cornea 14. Therefore, the iris-coloring part 40 is constituted by a dot pattern of a shape close to that of the iris, and the shape of an inner circumferential edge part 43 and an outer circumferential edge part 44 of the iris-coloring part 40 is a circle so as to be close to the shape of the iris of the typical human eye. The diameter dimension of the inner circumferential edge part 43 of the iris-coloring part 40 is preferably larger than the outer diameter of the pupil 45 so as to not block the visual field of the wearer. Furthermore, the diameter dimension of the outer circumferential edge part 44 of the iris-coloring part 40 is a size of a level that will overlap the circular colored band 42.

In specific terms, it is preferable that the inner diameter of the iris-coloring part 40 be 5 mm or greater, and considering the expansion of the pupil diameter at night, to be 8 mm or greater. Also, considering cases when the iris-coloring part 40 covers up to the pupil 45, it is preferable that the concentration of the iris-coloring part 40 be lower than the concentration of the circular colored band 42, and that the diameter of colored dots 46 constituting the dot pattern of the iris-coloring part 40 become smaller as they go toward the inner circumference side. Furthermore, it is also best to use an item with high light transmissivity as the coloring agent of the colored dots 46.

In particular, with the colored contact lens of this embodiment, the outer diameter of the optical part 18 is roughly the same as the inner diameter of the iris-coloring part 40, or is made to be slightly smaller than that, and the iris-coloring part 40 is made not to constitute the optical part 18.

The circular colored band 42 extends at a roughly constant width dimension across the entire circumference on the boundary 36 of the wearer's cornea 14 and sclera 34 while straddling both of them, and the same as with the iris-coloring part 40, the shape of an inner circumferential edge part 56 and an outer circumferential edge part 58 is a circle. The circular colored band 42 is an item intended make the outer diameter of the cornea 14 large and to clearly emphasize the outer edge, so compared to the iris-coloring part 40, the brightness is low, and coloring is implemented across its entirety. Therefore, the inner diameter of the circular colored band 42 is greatly separated from the pupil 45 so as not to block the visual field of the wearer, and is a size of a level that enters slightly to the inside from the outer edge of the cornea 14. The outer diameter of the circular colored band 42 is slightly larger than the outer diameter of the cornea 14, and the width dimension of the circular colored band 42 is a size of a level that is able to greatly and clearly emphasize the cornea 14 without an unnatural sense.

In specific terms, for the circular colored band 42 to sufficiently exhibit the intended cosmetic effects and the like, it is preferable for it to be formed having a radial direction width dimension of 0.75 to 3.0 mm, and more preferable to be formed having a radial direction width dimension of 1.0 to 2.5 mm. Also, the concentration distribution of the circular colored band 42 is not particularly limited. Specifically, the concentration of the circular colored band 42 can be uniform, or can change in the radial direction, and be provided with a part for which the concentration becomes lower as it moves from the inner circumference side to the outer circumference side in the radial direction.

The method for forming this kind of iris-coloring part 40 and the circular colored band 42 is not particularly limited, and can be formed using any known method from the past. For example, as noted in Japanese Unexamined Patent Publication No. JP-A-3-54519, it can be coloring during casting of a contact lens forming monomer when forming the contact lens, or hand drawing, photographic printing, screen printing or the like on a formed contact lens. Considering matters such as that the attachment surface which is the surface of the contact lens on which the iris-coloring part 40 and the circular colored band 42 are formed is a spherical surface, mass production capability, coloring precision, color reproducibility and the like, pad printing or inkjet printing can be used advantageously.

Furthermore, on the circumferential edge part 26 of the colored contact lens 10, in the orthogonal longitude line 48 direction extending orthogonal to the radial direction line 22 that passes through the lens geometric center 20, provided at both sides sandwiching the optical part 18 are slab-off areas 50, 50 known from the past such as those noted in Japanese Unexamined Patent Publication No. JP-A-2009-169104. The slab-off areas 50, 50 are thinner compared to the part positioned at both sides sandwiching the optical part 18 in the radial direction line 22 direction, and a double slab-off structure is constituted by both slab-off areas 50, 50 as a circumference direction positioning means. The thinner surfaces that provide both slab-off areas 50, 50 are set on the lens back surface (not illustrated), and by the colored contact lens 10 deforming along the cornea surface in a worn state, the thin shape set at the lens back surface appears on the lens front surface 16. Both of these slab-off areas 50, 50 have a linear symmetrical shape in relation to the orthogonal longitude line 48, and also have a linear symmetrical shape in relation to the radial direction line 22.

The colored contact lens 10 with this kind of constitution is an item for which it is possible to effectively prevent rotation of the colored contact lens 10 during wearing so as to stabilize the radial direction line 22 at a position extending in the lateral direction of the eyeball 12 on which it is worn using the interaction between the slab-off areas 50, 50 and the eyelids in the state worn on the eyeball 12.

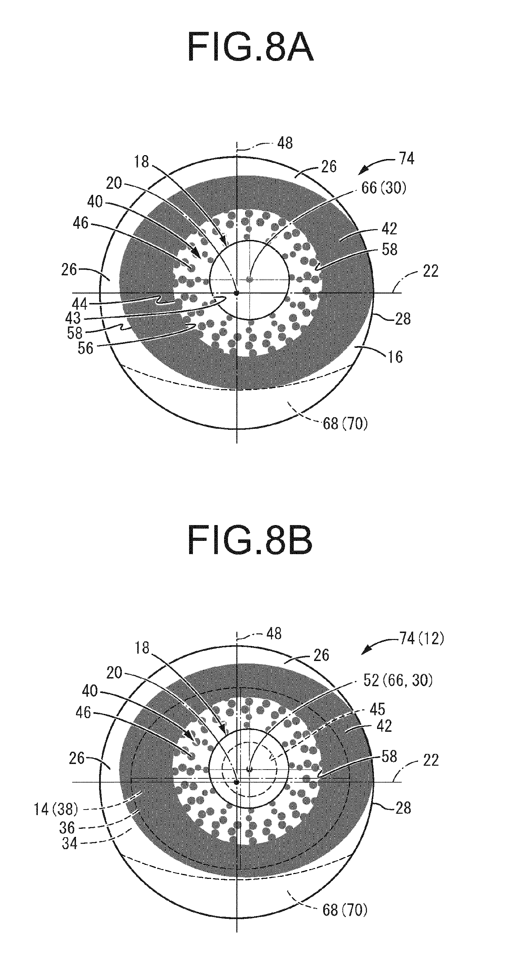

However, as shown in FIG. 8, with the colored contact lens 76 of the conventional structure, the optical part geometric center 30 of the colored contact lens 76 worn on the cornea 14 matches the lens geometric center 20, and the iris-coloring part 40 and circular colored band 42 centers also match the lens geometric center 20. Because of that, when the colored contact lens 76 of the conventional structure shown in FIG. 8A is worn on the eyeball 12 shown in model form in FIG. 1B, as shown in FIG. 8B, the lens geometric center 20 of the colored contact lens 76 becomes stable in a state skewed in relation to the visual axis 52 which is the center of the pupil 45 of the eyeball 12. As a result, the iris-coloring part 40 and the circular colored band 42 are not placed at a designated position of the cornea 14, and this becomes the cause of giving an unnatural sense to the outer appearance of the colored contact lens wearer, and of the iris-coloring part 40 and the circular colored band 42 blocking the field of view of the wearer. Also, since the optical part geometric center 30 stabilizes in a state skewed in relation to the visual axis 52, setting the outer diameter of the optical part 18 to a large size is unavoidable, and there is the risk of the iris-coloring part 40 entering inside the optical part 18, and having an effect on the field of view of the wearer.

On the other hand, with the colored contact lens 10 constituted according to this embodiment shown in FIG. 1, as described above, the center point 24 at which the centers of the iris-coloring part 40 and the circular colored band 42 are positioned is skewed to one side (the right side in FIG. 1) from the lens geometric center 20 on the radial direction line 22 taking into consideration the stabilized position during wearing. Because of that, when the colored contact lens 10 is worn on the eyeball 12 shown in model form in FIG. 1B, as shown in FIG. 1C, it is possible to arrange it in roughly the same position in the radial direction line 22 direction (lateral direction of the eyeball 12) in relation to the visual axis 52 that is the center of the pupil 45 of the eyeball 12. As a result, it is possible to place the iris-coloring part 40 and the circular colored band 42 at a suitable designated position on the cornea 14, making it possible to sufficiently improve problems such as giving an unnatural sense of the outer appearance of the wearer, bringing a decrease in the visual field and the like such as was seen with the colored contact lens 76 of the conventional structure.

In addition, with this embodiment, as shown in FIG. 1, since the optical part geometric center 30 is also matched to the center point 24 at which the centers of the iris-coloring part 40 and the circular colored band 42 are positioned, it is possible to have it at the same position in the radial direction as the visual axis 52 that is the center of the pupil 45 of the eyeball 12. Therefore, it is possible to have the part near the center of the optical part 18 be even closer to the center of the pupil 45 than with the colored contact lens 76 of the conventional structure, so it is possible to obtain better optical characteristics. Because of that, even if the outer diameter of the optical part 18 is smaller than the inner diameter of the iris-coloring part 40, it is possible to obtain sufficient optical characteristics. Then, by it being possible to use the optical part 18 with a smaller diameter than in the past, it is possible to make the thickness dimension of the colored contact lens 10 smaller.

Also, with the colored contact lens 10 of this embodiment, in a state worn on the eyeball 12, the orthogonal longitude line 48 is stabilized at a lens rotation position that is in the vertical direction of the wearing eye by the interaction of the slab-off areas 50, 50 and the eyelids. By doing this, the colored contact lens 10 of this embodiment can reduce or avoid the problem of the iris-coloring part 40 and the circular colored band 42 being positionally skewed from the desired position of the cornea 14 of the wearer, and to position and stabilize it at a desired site, simply by wearing it so that one side for which the center of the iris-coloring part 40 and the circular colored band 42 is skewed is positioned toward the nose. Because of that, it is possible to prevent in advance the problems of the colored contact lens rotating when worn, the iris-coloring part 40 and the circular colored band 42 for which the center is skewed moving toward the ear or upward or downward, giving an unnatural sense to the observer, blocking the field of view of the wearer and the like. In addition, in the case of a wearer with the same visual acuity in both eyes, it is also possible to use the same lens reversed vertically for the right eye and for the left eye. Furthermore, the colored contact lens 10 of this embodiment does not necessarily have to be provided as a left/right pair, but by providing as a left/right pair, it is possible to obtain even more excellent problem prevention effects.

With the colored contact lens 10 of this embodiment, we described a case when both the iris-coloring part 40 and the circular colored band 42 are provided, but the present invention can also be applied in the same manner when only one or the other is provided.

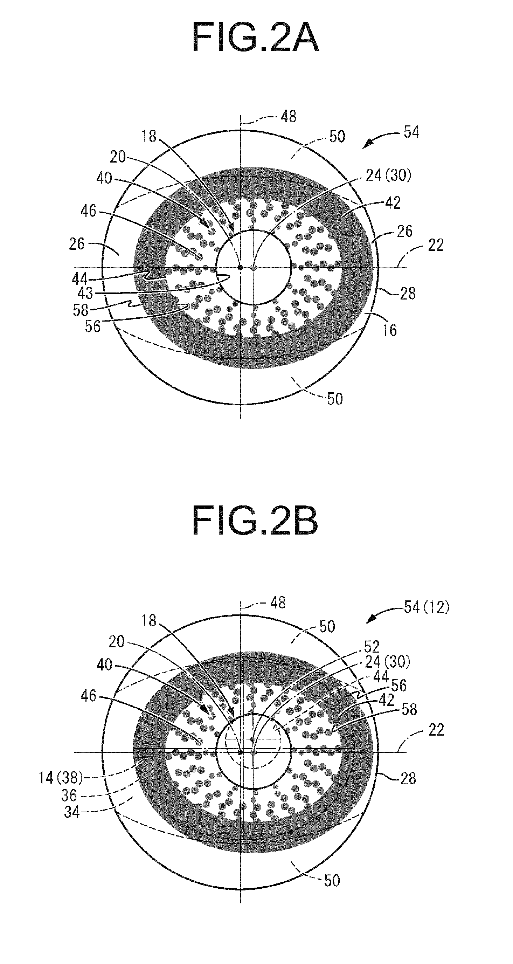

Next, using FIG. 2 through FIG. 8, we described colored contact lenses 54, 60, 61, 63, 64, 72, and 74 as the second through eighth embodiments of the present invention. With the description hereafter, for the members and parts of the same constitution as those of the first embodiment described previously, the same code numbers are given in the drawings as those of the first embodiment, and a detailed description of those will be omitted.

As shown in FIG. 2A, the colored contact lens 54 of the second embodiment of the present invention is an item for which the shape of the circular colored band 42 of the colored contact lens 10 is made to be different from that of the first embodiment. In specific terms, the inner circumferential edge part 56 and the outer circumferential edge part 58 of the circular colored band 42 have an oval shape, and the major axis of the inner circumferential edge part 56 and the outer circumferential edge part 58 matches the radial direction line 22.

As shown in FIG. 1B, there are many cases when the boundary 36 of the cornea 14 and the sclera 34 of the human eyeball 12 is an oval shape, and with this embodiment, as shown in FIG. 2A, the inner circumferential edge part 56 and the outer circumferential edge part 58 of the circular colored band 42 have an oval shape. Therefore, as shown in FIG. 2B, when wearing the colored contact lens 54 overlapping on the eyeball 12, it is possible to have the inner circumferential edge part 56 and the outer circumferential edge part 58 of the circular colored band 42 be correspondingly positioned across the inner circumference side and the outer circumference side of the boundary 36 of the wearer's cornea 14 and the sclera 34, and possible to make the outer diameter of the wearer's cornea 14 even larger and the outer edge more clearly emphasized without causing an unnatural sense.

Also, considering that there are cases when the colored contact lens 54 stabilizes with a slight tilt from the radial direction line 22 due to individual variations of the eyeball 12 or the attachment method of the slab-off areas 50, 50, it is also possible to form the circular colored band 42 tilted by the expected amount.

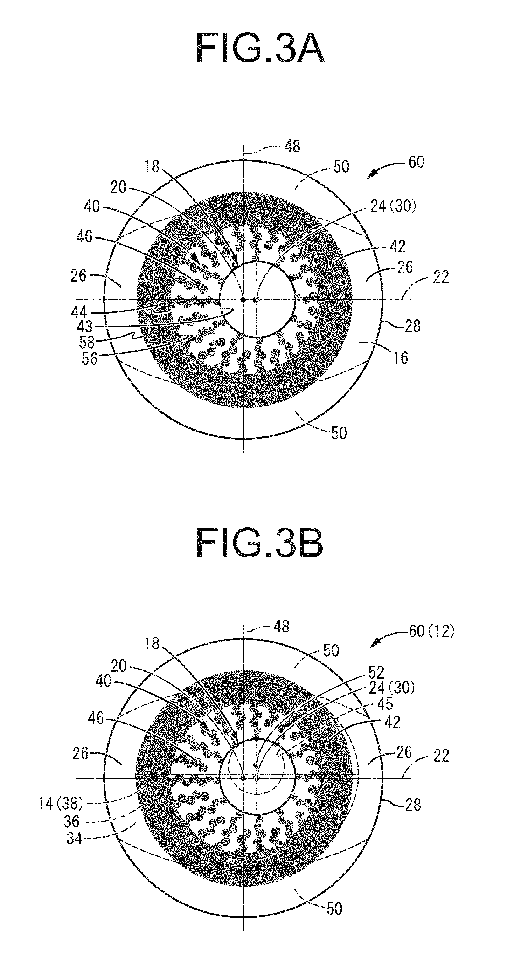

FIG. 3A shows the front view of the colored contact lens 60 as the third embodiment of the present invention. The colored contact lens 60 of this embodiment differs from the colored contact lens 10 of the first embodiment in that the center of the circular colored band 42 matches the lens geometric center 20. In other words, with this embodiment, the centers of the iris-coloring part 40 and the circular colored band 42 are mutually separated on the radial direction line 22.

In this case as well, when as shown in FIG. 3B the colored contact lens 60 is worn overlapping the eyeball 12 shown in FIG. 1B, as shown in FIG. 3B, the center point 24 for which the center of the iris-coloring part 40 is positioned can be at roughly the same position in the radial direction line 22 direction (lateral direction of the eyeball 12) as the visual axis 52 which is the center of the pupil 45 of the eyeball 12, and it is possible to reduce the skew of the visual axis 52 and the iris-coloring part 40. Because of that, it is possible to suppress issues of giving an unnatural sense to the outer appearance of the wearer or decreasing the visual field as were seen with the colored contact lens 76 of the conventional structure.

In this way, even if the center of only one of the circular colored band 42 and the iris-coloring part 40 is put in the same position in the radial direction line 22 direction as the visual axis 52 which is the center of the pupil 45 of the eyeball 12, it is possible to suppress the issues of giving an unnatural outer appearance of the wearer, and decreasing the visual field.

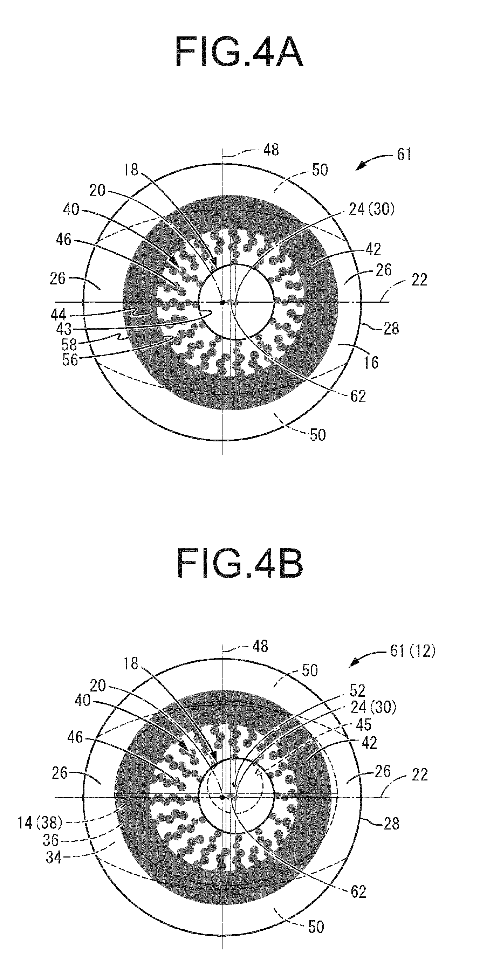

FIG. 4A is a front view of the colored contact lens 61 as the fourth embodiment of the present invention. The colored contact lens 61 of this embodiment differs from the colored contact lens 60 of the third embodiment in that the center of the circular colored band 42 is positioned at a center point 62 different from the center point 24 skewed to one side on the radial direction line 22 from the lens geometric center 20.

By doing this, when as shown in FIG. 4B the colored contact lens 61 is worn overlapping the eyeball 12 shown in FIG. 1B, as shown in FIG. 4B, it is possible to have the center point 62 for which the center of the circular colored band 42 is positioned made close to the visual axis 52 which is the center of the pupil 45 of the eyeball 12, and the skew volume of the iris-coloring part 40 is made greater than the skew volume of the circular colored band 42 in relation to the lens geometric center 20. By doing this, it is possible to respond to the visual axis 52 being more toward the nose than the statistical cornea center, or movement of the visual axis 52 further to the inside due to convergence when viewing at a close distance such as when facing a person or the like, and to obtain a better cosmetic effect without an unnatural sense.

In this way, even when the position of the centers of the circular colored band 42 and the iris-coloring part 40 and the lens geometric center 20 are all at different positions, it is possible to suppress the issues of giving an unnatural sense to the outer appearance of the wearer, and decreasing the visual field.

Also, statistically, it is known that there are many cases when the contact lens stabilizes skewed toward the ear by approximately 0.5 mm in relation to the visual axis 52 described later. Considering that point, in relation to the lens geometric center 20, preferably the skew volume of the center of the iris-coloring part 40 is set in a range of 0.2 to 2.0 mm, and/or the skew volume of the circular colored band 42 is 0 to 1.7 mm, and more preferably, the skew volume of the center of the iris-coloring part 40 is set in a range of 0.4 to 1.0 mm, and/or the skew volume of the center of the circular colored band 42 is 0.1 to 0.7 mm in relation to the lens geometric center 20.

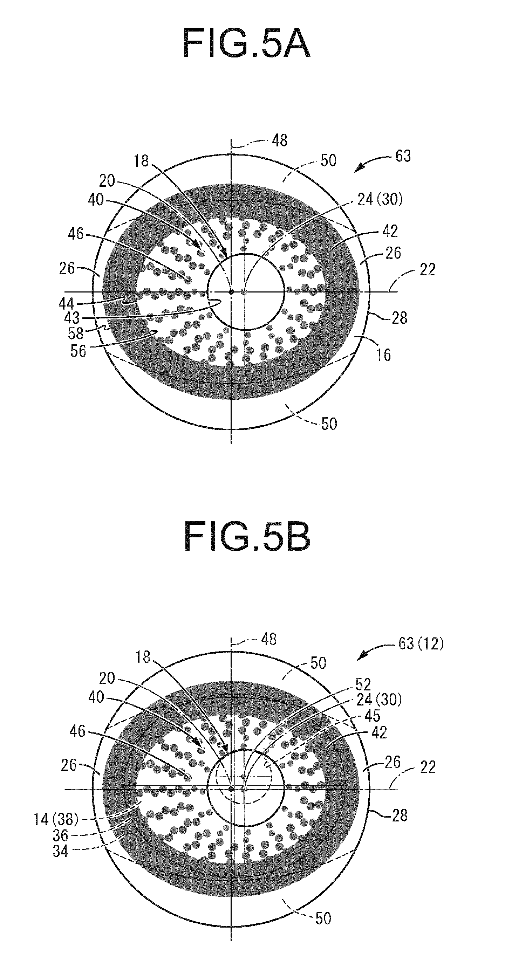

FIG. 5A shows a front view of the colored contact lens 63 as the fifth embodiment of the present invention. The colored contact lens 63 of this embodiment is an item for which the position of the circular colored band 42 is made to be different from that of the colored contact lens 54 of the second embodiment. In specific terms, the center position of the circular colored band 42 is made to match the lens geometric center 20.

With this embodiment as well, when as shown in FIG. 5B the colored contact lens 63 is worn overlapping the eyeball 12 shown in FIG. 1B, as shown in FIG. 5B, it is possible to have the center point 24 of the iris-coloring part 40 positioned at roughly the same place in the radial direction line 22 direction (lateral direction of the eyeball 12) as the visual axis 52 that is the center of the pupil 45 of the eyeball 12. Because of that, it is possible to suppress phenomena such as giving an unnatural sense to the outer appearance of the wearer and decreasing the visual field as was seen with the colored contact lens 76 of the conventional structure.

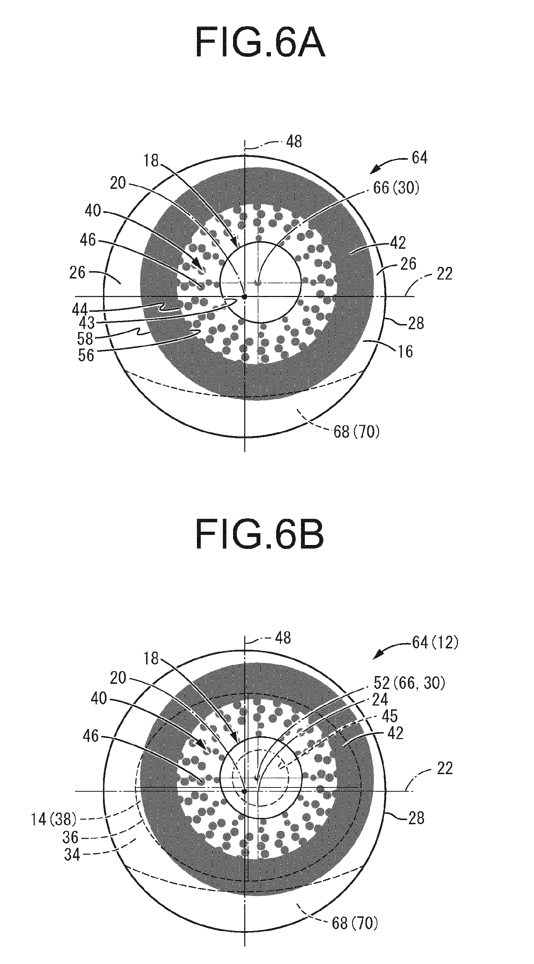

FIG. 6A is a front view of the colored contact lens 64 as the sixth embodiment of the present invention. The colored contact lens 64 of this embodiment has a different position of the circular colored band 42, the iris-coloring part 40, and the optical part 18 than those of the colored contact lens 10 of the first embodiment. In specific terms, their center points 66 provided concentrically are further skewed upward to the one side (upward in FIG. 6) sandwiching the radial direction line 22 compared to the center point 24 of the first embodiment. This takes into consideration that the contact lens worn on the eyeball 12 typically has many points for which the lens geometric center 20 stabilized at points skewed further downward than the visual axis 52 due to the effect of gravity.

Furthermore, the colored contact lens 64 exhibits a so-called prism ballast shape known from the past for the overall lens shape. Specifically, the prism ballast type colored contact lens 64 is constituted such that the lens thickness becomes successively thicker as it goes downward in the direction in which the orthogonal longitude line 48 extends (vertical direction in FIG. 6), and by doing that, rotation is effectively prevented during wearing of the colored contact lens 64, and this constitutes the positioning means that positions the lens circumference direction position. Also, the colored contact lens 64 of that kind of constitution, due to issues such as the bottom part of the lens becoming too thick, and giving a bad wearing sensation, has at least the bottom part of the lens front surface 16 cut, and has a slab-off area 68 formed, and by doing this, a slab-off surface 70 with for example a spherical shape, cone shape, non-spherical shape or the like is formed at least on the bottom part of the lens front surface 16, which improves the wearing sensation.

When the colored contact lens 64 shown in FIG. 6A constituted in this way is worn overlapping the eyeball 12 shown in FIG. 1B, when the lens geometric center 20 stabilizes at a position skewed further downward than the visual axis 52 due to the effect of gravity, as shown in FIG. 6B, the optical part 18 and the iris-coloring part 40 and the circular colored band 42 center point 66 can be roughly matched with the visual axis 52 that is the center of the pupil 45 of the eyeball 12. Because of that, it is possible to more advantageously reduce or eliminate the occurrence of problems such as the unnatural sense of the outer appearance of the wearer and the decrease in the visual field that occurred due to skew of the center positions of the circular colored band 42 and the iris-coloring part 40 with the visual axis 52. Also, since it is possible to position the center part of the optical part 18 at the pupil 45 which touches the visual field, it is possible to make this even smaller than the outer diameter of the optical part 18 (e.g. the inner diameter of the iris-coloring part 40 or less) as shown in FIG. 6B, and it is also possible to make the thickness dimension of the colored contact lens 64 even smaller.

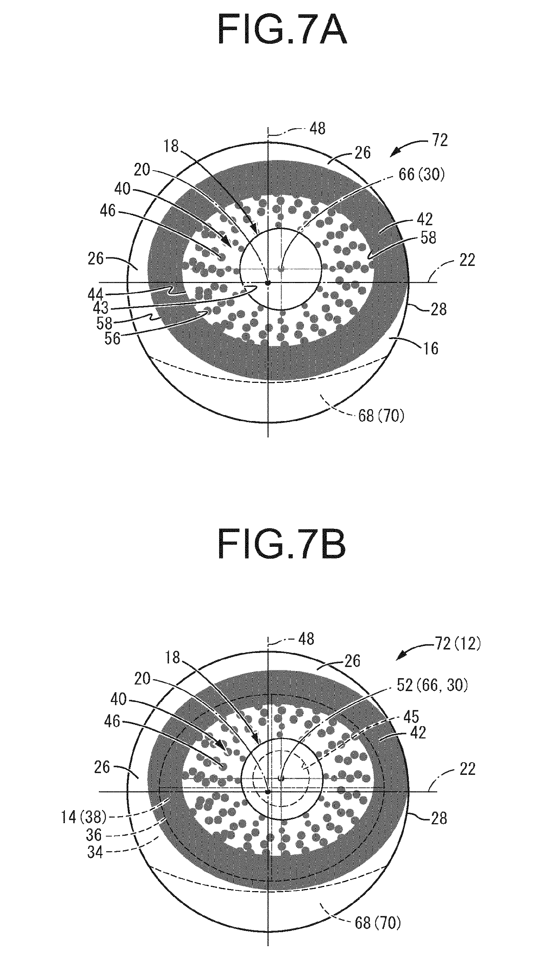

FIG. 7A is a front view of the colored contact lens 72 as the seventh embodiment of the present invention. The colored contact lens 72 of this embodiment is an item for which the positions of the circular colored band 42, the iris-coloring part 40, and the optical part 18 are different from those of the colored contact lens 54 of the second embodiment. In specific terms, their center points 66 provided concentrically are further skewed to one side (upward in FIG. 7) sandwiching the radial direction line 22 compared to the center point 24 of the second embodiment. For the colored contact lens 72, the same as with the colored contact lens 64 of the sixth embodiment, the positioning means is constituted by having a prism ballast shape for the overall lens shape, and the slab-off area 68 and the slab-off surface 70 are formed at the bottom part of the lens front surface 16.

When the colored contact lens 72 with this kind of constitution shown in FIG. 7A is worn overlapping on the eyeball 12 shown in FIG. 1B, as shown in FIG. 7B, the center point 66 of the optical part 18, the iris-coloring part 40, and the circular colored band 42 can be roughly matched with the visual axis 52 that is the center of the pupil 45 of the eyeball 12. Because of that, the same as with the previously noted embodiments, it is possible to eliminate the phenomena of an unnatural sense for the outer appearance of the wearer or a decrease in the visual field which occurred due to skew of the center position of the circular colored band 42 and the iris-coloring part 40 with the visual axis 52. Also, since it is possible to bring the center part of the optical part 18 to the pupil 45 which touches the visual field, it is also possible to make the diameter smaller for the optical part 18 as shown in FIG. 7.

FIG. 8A is a front view of the colored contact lens 74 as the eighth embodiment of the present invention. The colored contact lens 74 of this embodiment is an item for which the shape of the inner circumferential edge part 56 of the circular colored band 42 differs from that of the colored contact lens 72 of the seventh embodiment. In specific terms, that shape is a circle.

With this case, of course, the same as with the previously noted embodiments, it is possible to eliminate the phenomena of an unnatural sense for the outer appearance of the wearer and a decrease in the visual field that occurred due to skew of the center position of the circular colored band 42 and the iris-coloring part 40 with the visual axis 52. It is also possible to make the width of the circular colored band 42 wider, so it is possible to make the overall expression of the face cuter.

Above, we gave a detailed description of embodiments of the present invention, but these are nothing more than examples, and the present invention is not to be interpreted in any way as being limited by the specific notations in the embodiments, and it is possible to carry out modes for which various improvements, corrections and the like have been added based on the knowledge of a person skilled in the art, and though not listed individually, it goes without saying that all of these are items included within the scope of the present invention.

For example, with the embodiments described previously, the outer diameter of the optical part 18 formed in concentric form with the iris-coloring part 40 was shown by example as being able to be made the same or smaller than the inner diameter of the iris-coloring part 40, but the invention is not limited to this, and of course also included in the present invention are items for which the outer diameter of the optical part 18 is simply made to be larger than the inner diameter of the iris-coloring part 40, or items for which the outer diameter of the optical part 18 is made to be larger than the inner diameter of the iris-coloring part 40 while the optical part geometric center 30 of the optical part 18 is made to match the lens geometric center 20.

Also, any item can be used for the positioning means used for the colored contact lens of the present invention as long as it is an item that can do positioning of the circumference direction of the contact lens, and in addition to the slab-off, prism ballast and the like noted in the embodiments of the examples, it is also possible to use any known positioning means from the past.

In addition, the shape of the iris-coloring part 40 and the circular colored band 42 is not limited to the items shown by example, and it is possible to suitably change this according to the desired cosmetic effect. For example, it is possible to form the width dimension of the circular colored band 42 to be larger than the item in the example, and to more greatly enlarge and emphasize the so-called dark part of the eyes. Also, the shape of the iris-coloring part 40 is not limited to being a dot pattern, and it is also possible to use any shape as long as it is a pattern by which the iris area 38 can be colored.

### KEYS TO SYMBOLS

10, 64: Colored contact lens
12: Eye
14: Cornea
18: Optical part
20: Lens geometric center
22: Radial direction line
24: Center point
26: Circumferential edge part
34: Sclera
36: Boundary
38: Iris area
40: Iris-coloring part
42: Circular colored band
43: Inner circumferential edge part
44: Outer circumferential edge part
45: Pupil
50: Slab-off area
52: Visual axis
56: Inner circumferential edge part
58: Outer circumferential edge part
66: Center point

## Claims

1. A colored contact lens configured to be worn on an eye including at least one of an iris-coloring part overlapping an iris area of the eye and a circular colored band expanding to and overlapping an inner circumference side and an outer circumference side across a boundary of a cornea and a sclera of the eye, the colored contact lens being **characterized in that**:
centers of the iris-coloring part and/or the circular colored band are skewed to one side from a lens geometric center on a radial direction line that passes through the lens geometric center; and
a positioning means is provided that positions a lens circumference direction position so as to stabilize the radial direction line at a position extending in a lateral direction of the eye.

2. The colored contact lens according to claim 1, wherein in relation to the lens geometric center, a skew volume of the center of the iris-coloring part is 0.2 to 2.0 mm, and/or a skew volume of the center of the circular colored band is 0 to 1.7 mm.

3. The colored contact lens according to claim 1 or 2, wherein the lens includes both the iris-coloring part and the circular colored band provided on the outer circumference side of the iris-coloring part, and the iris-coloring part and the circular colored band are formed in concentric form.

4. The colored contact lens according to claim 1 or 2, wherein the centers of the iris-coloring part and the circular colored band are mutually separated on the radial direction line.

5. The colored contact lens according to any one of claims 1-4, wherein an inner circumferential edge part and an outer circumferential edge part of the iris-coloring part are both circular.

6. The colored contact lens according to any one of claims 1-4, wherein an outer circumferential edge part of the circular colored band is an oval shape, and a major axis of the outer circumferential edge part matches the radial direction line.

7. The colored contact lens according to any one of claims 1-6, further including an optical part provided at a lens center part and a circumferential edge part surrounding the optical part, wherein the positioning means is constituted by a pair of slab-off areas for which the circumferential edge part is made thinner at both sides sandwiching the radial direction line.

8. The colored contact lens according to any one of claims 1-6, further including an optical part provided at the lens center part and a circumferential edge part surrounding the optical part, wherein the positioning means is constituted by a prism ballast structure for which, compared to one side sandwiching the radial direction line, a peripheral part of the other side is made to be thicker.

9. The colored contact lens according to claim 8, wherein the centers of the iris-coloring part and/or the circular colored band are further biased from the radial direction line to the one side for which the peripheral part is made thin.

10. The colored contact lens according to any one of claims 1-9, wherein
the iris-coloring part has a ring shape,
an optical part is provided at the lens center part,
an optical geometrical center of the optical part matches the center of the iris-coloring part, and
an outer diameter of the optical part is equal to or smaller than an inner diameter of the iris-coloring part.
